# EUROPÄISCHE PATENTANMELDUNG

(11) **EP 2 807 915 A1**
(43) Veröffentlichungstag der Anmeldung: **03.12.2014**
(21) Anmeldenummer: 14401058.4
(22) Anmeldetag: 12.05.2014
(51) Int. Cl.: A01C 7/12

(54) **Landwirtschaftliche Verteilmaschine**

(30) Priorität: 28.05.2013 DE 102013105447
(71) Anmelder: Amazonen-Werke H. Dreyer GmbH & Co. KG, 49205 Hasbergen (DE)
(72) Erfinder: Boltes, Hajo, 26131 Oldenburg (DE); Mertens, Daniel, 26135 Oldenburg (DE)

(57) **Zusammenfassung**

Verteilmaschine, insbesondere Sämaschine, mit einem vorzugsweise lang gestreckten Vorratsbehälter (1), in dessen unteren Bereich zumindest eine Auslassöffnung mit zugeordnetem Dosierelement (2) angeordnet ist, wobei unter dem zumindest einem Dosierelement (2) zumindest ein das von dem Dosierelement (2) dosierte Material in Richtung des Bodens leitendes Leitorgan (3) angeordnet ist, wobei unter dem Leitorgan (3) seitlich zumindest ein Auffangelement (10) zum Auffangen des von dem zumindest einem Dosierorgan (2) dosierten Materials einschiebbar ist. Um auch bei beengten Raumverhältnissen in einfacher Weise ein Auffangelement (10) unterhalb der Dosierorgane (2) zur Durchführung der Abdrehvorganges anordnen zu können, ist vorgesehen, dass sich zwischen dem unteren Bereich (4) des Dosierelementes (2) und dem oberen Ende des Leitorgans (3) ein Freiraum (7) befindet, dass in dem Freiraum (7) wahlweise das Auffangelement (10) oder ein zumindest ein trichterartiges Zwischenleitelement (8) einschiebbar ist, und zwar derart, dass nach Entfernen des Auffangelementes (10) aus dem Freiraum (7) zumindest ein trichterartiges Zwischenleitelement (8) in den Freiraum (7) einschiebbar ist.

## Beschreibung

Die Erfindung betrifft eine Verteilmaschine gemäß des Oberbegriffs des Patentanspruches 1.

Eine derartige Verteilmaschine ist in der DE 24 44 011 A1 beschrieben. Diese Verteilmaschine weist einen Vorratsbehälter auf, in dessen unteren Bereich mehrere nebeneinander angeordnete Auslassöffnungen mit zugeordneten Dosierelementen angeordnet sind. Unter den Dosierelementen sind das dosierte Material zum Boden leitende Leitorgane angeordnet. Diese Leitorgane können zur Durchführung eines Abdrehvorganges entfernt oder nach unten versetzt werden, so dass in diesem Freiraum unterhalb der Dosierelemente ein Auffangelement einzuschieben ist.

Das Entfernen oder nach unten Versetzen der Leitorgane erfordert einen konstruktiven Aufwand oder entsprechenden Raum, um die Leitorgane nach unten Versetzen zu können. Dies ist bei beengten Raumverhältnissen nicht möglich.

Der Erfindung liegt die Aufgabe zu Grunde, auch bei beengten Raumverhältnissen in einfacher Weise ein Auffangelement unterhalb der Dosierorgane zur Durchführung des Abdrehvorganges anordnen zu können.

Diese Aufgabe der Erfindung gemäß dadurch gelöst, dass sich zwischen dem unteren Bereich des Dosierelementes und dem oberen Ende des Leitorgans ein Freiraum befindet, dass in dem Freiraum wahlweise das Auffangelement oder ein zumindest ein trichterartiges Zwischenleitelement einschiebbar ist, und zwar derart, dass nach Entfernen des Auffangelementes aus dem Freiraum zumindest ein trichterartiges Zwischenleitelement in den Freiraum einschiebbar ist.

Infolge dieser Maßnahme wird eine sehr einfache Möglichkeit geschaffen, das Aufwandelement zur Durchführung des Abdrehvorganges anstelle des trichterartigen Zwischenelementes in dem Freiraum anzuordnen. Während des Ausbringvorganges befindet sich das trichterartige Zwischenelement als Überbrückungselement zwischen den Dosierelementen und den Leitorganen. Während des Abdrehvorganges befindet sich anstelle des trichterartigen Zwischenelementes das Aufwandelement in den Freiraum zwischen den Dosierelementen und den Leitorganen.

Bei einem Vorratsbehälter, der langestreckt ausgebildet ist und mehrere den Aulassöffnungen zugeordnete und nebeneinander angeordnete Dosierelemente aufweist, ist vorgesehen, dass das zumindest eine Zwischenleitelement eine an die Anzahl der zugeordneten Dosierelemente und Leitorgane angepasste Anzahl von trichterartigen Leitelementen aufweist. Hierdurch wird eine kontrollierte Zuleitung des jeweils von einem Dosierelemente dosierten Materiales zu dem zugeordneten Leitorgane sichergestellt.

Bei Verteilmaschinen mit sehr langgestreckten Vorratsbehältern ist vorgesehen, dass zwei Zwischenelemente vorgesehen sind, dass jedes Zwischenelement einer Hälfte der Dosierelemente und Leitorganen zugeordnet ist.

Weitere Einzelheiten der Erfindung sind der Beispielsbeschreibung zu entnehmen. Die Zeichnungen zeigen
- Fig. 1: die als Sämaschine ausgebildete Verteilmaschine mit eingeschobenen Zwischenelement in Prinzipdarstellung und perspektivischer Darstellung,
- Fig. 2: der Bereich mit dem Zwischenelement der Sämaschine in Teilansicht und vergrößertem Maßstab in perspektivischer Darstellung,
- Fig. 3: das Zwischenelement in perspektivischer Darstellung,
- Fig. 4: die beiden Auffangelemente in perspektivischer Darstellung,
- Fig. 5: die Sämaschine mit eingeschobenen Auffangelementen in Prinzipdarstellung und perspektivischer Darstellung und
- Fig. 6: der Bereich mit den eingeschobenen Auffangelementen der Sämaschine in Teilansicht und vergrößertem Maßstab in perspektivischer Darstellung.

Die als Sämaschine ausgebildete Verteilmaschine weist den langgestreckten Vorratsbehälter 1 auf. Der Vorratsbehälter 1 ist i in bekannter und daher nicht näher dargestellter Weise auf einem Rahmen mit Laufrädern oder in geeigneter Weise auf eine Bodenbearbeitungsmaschine aufgebaut. In Seitenansicht gesehen ist der Vorratsbehälter 1, zumindest in seinem unteren Bereich trichterförmig ausgestaltet. In dem unteren Bereich des Vorratsbehälters 1 sind nebeneinander und beabstandet zueinander eine Anzahl von Auslassöffnungen angeordnet. Jeder Auslassöffnung ist ein Dosierelement 2 zugeordnet. Mittels diesen Dosierelementen 2 lässt sich das in dem Vorratsbehälter 1 befindliche Material, beispielsweise Saatgut oder körnige Düngemittel in einstellbarer Weise dosieren und über unterhalb der als Dosierelementen 2 ausgebildeten Dosierorgane angeordneten Leitorgane 3, die das dosierte Material in Richtung des Bodens leiten, dem Boden zu führen.

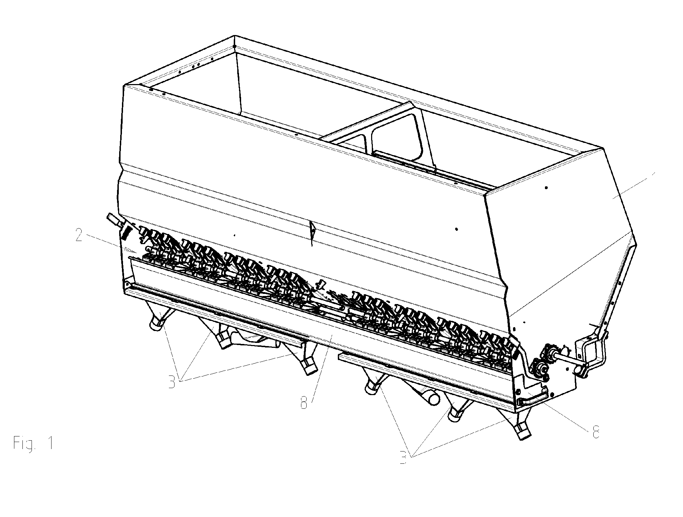

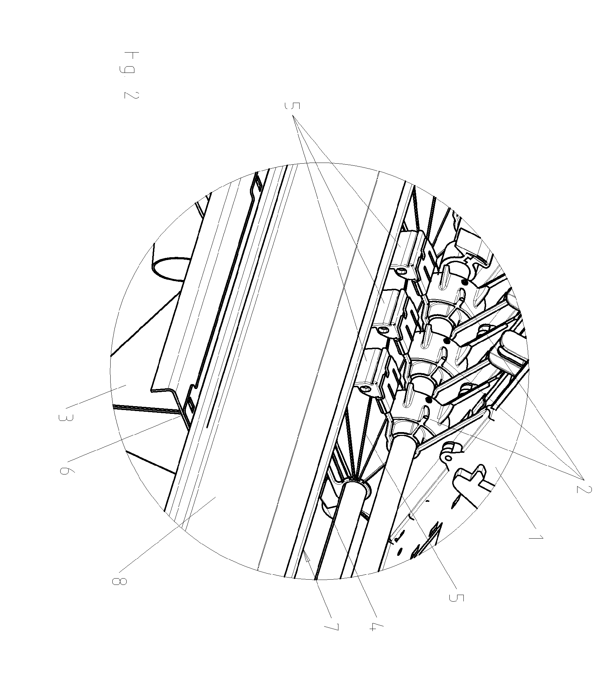

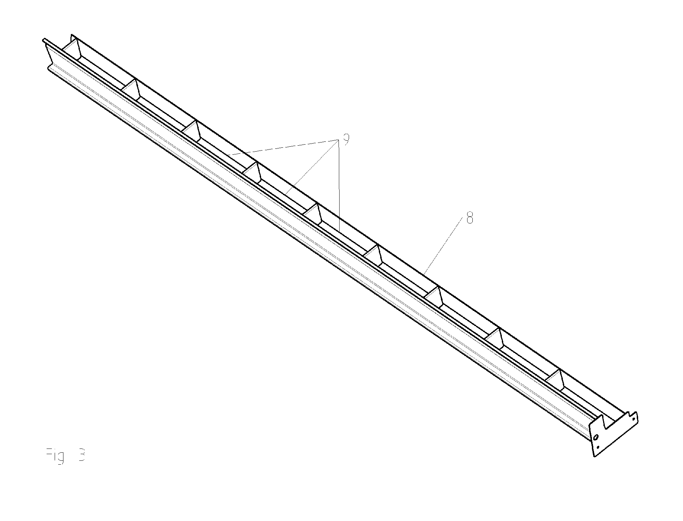

Zwischen den unteren Enden 4 der Dosierelemente 2 bzw. den Dosierelementen zugeordneten Dosiergehäusen 5 und den oberen Enden 6 der Leitorgane 3 befindet sich ein sich über die Breite des Vorratsbehälters 1 erstreckender Freiraum 7. In diesem Freiraum 7 sind während des Ausbringvorganges von dem sich in dem Vorratsbehälter befindlichen Material während der Ausbringarbeit sich jeweils über etwa die halbe Breite des Vorratsbehälters 1 erstreckende Zwischenelemente 8, gemäß Fig. 3 angeordnet, wie die Fig. 1 und 2 zeigen, so dass jedes Zwischenelement 8 einer Hälfte der Dosierelemente 2 und Leitorgane 3 zugeordnet ist. Jedes Zwischenleitelement 8 weist eine an die Anzahl der zugeordneten Dosierelementen 2 und Leitorgane 3 angepasste Anzahl von trichterartigen Leitelementen 9 auf, wie insbesondere die Fig. 3 zeigt.

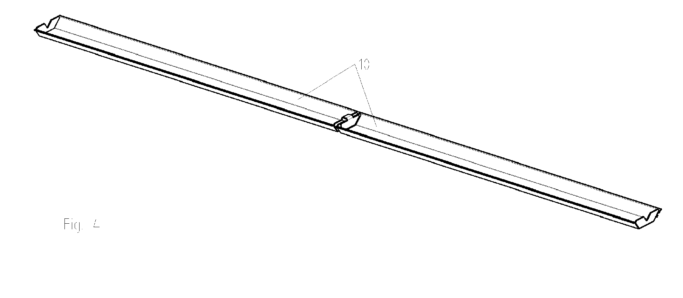

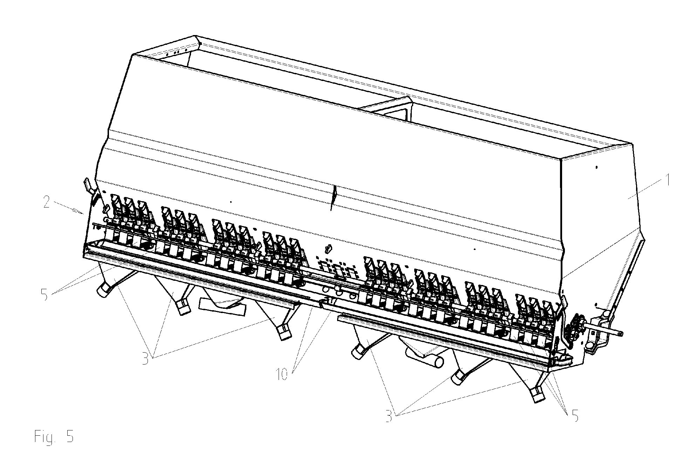

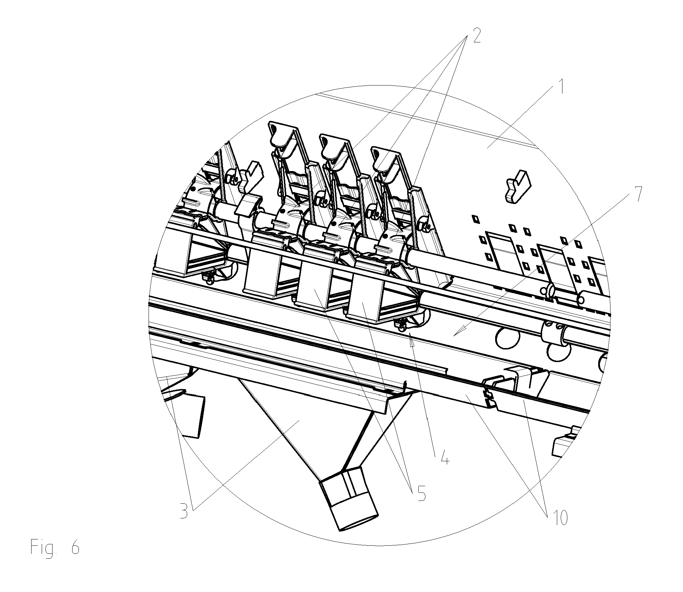

Um den Abdrehvorgang durchzuführen, werden die Zwischenleitelemente 9 aus dem Freiraum 7 entfernt und anstelle dessen wird in diesen Freiraum 7 von jeder Seite ein Auffangelement 10 gemäß Fig. 4 eingeschoben. Diese in den Freiraum 7 eingeschobenen Auffangelemente 10, wie die Fig. 5 und 6 zeigen, fangen das während des Abdrehvorganges von den Dosierelementen 2 dosierte Material auf. Somit befindet sich zwischen dem unteren Bereich 4 der Dosierelemente 2 und den oberen Ende 6 der Leitorgane 3 ein Freiraum 7. In dem Freiraum 7 sind somit wahlweise die beiden Auffangelemente 10 oder die beiden Zwischenleitelemente 8 einzuschieben, und zwar derart, dass nach Entfernen der Auffangelemente 10 aus dem Freiraum 7 die beiden Auffangelementen 10 zum Auffangen des dosierten Materiales während des Abdrehvorganges in den Freiraum 7 einzuschieben.

## Patentansprüche

1. Verteilmaschine, insbesondere Sämaschine, mit einem vorzugsweise lang gestreckten Vorratsbehälter, in dessen unteren Bereich zumindest eine Auslassöffnung mit zugeordnetem Dosierelement angeordnet ist, wobei unter dem zumindest einem Dosierelement zumindest ein das von dem Dosierelement dosierte Material in Richtung des Bodens leitendes Leitorgan angeordnet ist, wobei unter dem Leitorgan seitlich zumindest ein Auffangelement zum Auffangen des von dem zumindest einem Dosierorgan dosierten Materials einschiebbar ist, **dadurch gekennzeichnet, dass** sich zwischen dem unteren Bereich (4) des Dosierelementes (2) und dem oberen Ende (6) des Leitorgans (3) ein Freiraum (7) befindet, dass in dem Freiraum (7) wahlweise das Auffangelement (10) oder ein zumindest ein trichterartiges Zwischenleitelement (8) einschiebbar ist, und zwar derart, dass nach Entfernen des Auffangelementes (10) aus dem Freiraum (7) zumindest ein trichterartiges Zwischenleitelement (8) in den Freiraum (7) einschiebbar ist.

2. Verteilmaschine nach Anspruch 1, wobei der Vorratsbehälter langestreckt ausgebildet ist und mehrere den Auslassöffnungen zugeordnete und nebeneinander angeordnete Dosierelemente aufweist, **dadurch gekennzeichnet, dass** das zumindest eine Zwischenleitelement (8) eine an die Anzahl der zugeordneten Dosierelemente (2) und Leitorgane (3) angepasste Anzahl von trichterartigen Leitelementen (9) aufweist.

3. Verteilmaschine nach zumindest einem der vorstehenden Ansprüche, **dadurch gekennzeichnet, dass** zwei Zwischenelemente (8) vorgesehen sind, dass jedes Zwischenelement (8) einer Hälfte der Dosierelemente (2) und Leitorgane (3) zugeordnet ist.
